# EUROPEAN PATENT APPLICATION

(11) **EP 4 807 815 A1**
(43) Date of publication of application: **16.09.2026**
(21) Application number: 24889088.1
(22) Date of filing: 05.11.2024
(51) Int. Cl.: H01M 4/62, H01M 4/131, H01M 10/052, H01M 4/02

(54) **THICK FILM ELECTRODE AND SECONDARY BATTERY INCLUDING SAME**

(30) Priority: 06.11.2023 KR 20230151882
(71) Applicant: CJ Cheiljedang Corporation, Seoul 04560 (KR)
(72) Inventor: JANG, Robin, Seoul 04560 (KR); YOON, Ki Chull, Seoul 04560 (KR); LEE, Changsuk, Seoul 04560 (KR); LEE, Eun-Hye, Seoul 04560 (KR); LEE, Seung Jin, Seoul 04560 (KR); HWANG, Yunil, Seoul 04560 (KR); KANG, Dong Hyuk, Seoul 02841 (KR); YUN, Young Soo, Seoul 02841 (KR)
(74) Representative: Meissner Bolte Partnerschaft mbB
(86) International application number: PCT/KR2024/017281
(87) International publication number: WO 2025/100900

(57) **Abstract**

The present invention relates to a thick film electrode and a secondary battery including same. The thick film electrode comprises an electrode active material layer containing an electrode active material, a binder, and a carbon-based conductive material, and the binder includes polyhydroxyalkanoate (PHA).

## Description

### Technical Field

The present disclosure relates to a thick electrode comprising an electrode active material layer with a thick thickness; and to a secondary battery comprising the thick electrode, whereby it can have a small volume, a high energy density, and a high capacity.

### Background Art

Lithium secondary batteries, which have high electrochemical stability and energy efficiency, among secondary batteries, are currently the most widely used power source for portable electronic devices and electric vehicles. As demand for secondary batteries with higher energy densities increases, research has been conducted to improve energy density by changing the content ratio of nickel, which has high lithium storage characteristics, in the components of electrode active materials of lithium secondary batteries.

However, there is a problem in that a serious decrease in energy density occurs during charging and discharging due to the decrease in stability caused by the increase in the content of nickel. As a result, new research strategies are needed to improve the energy density of lithium secondary batteries while maintaining high electrochemical stability and energy efficiency.

Since the energy density of a secondary battery is calculated as the sum of the volume and weight of all components that constitute the battery, manufacturing a thick electrode can be a strategy that can increase both the energy densities of the secondary battery per unit volume and per unit weight without changing the materials that constitute the electrode. Specifically, the load density and thickness of a conventional positive electrode active material are 10 mg/cm² and 100 µm, respectively, which correspond to 45% of the total weight of a secondary battery. If the load density is increased twice, the energy density per unit weight of a single secondary battery can be mathematically increased by about 140%. This means that manufacturing a thick electrode can theoretically enhance capacity even when the same electrode active material is used.

However, when a thick electrode is manufactured using a conventional electrode manufacturing method such as a slurry method, serious problems arise due to cracking and flaking caused by strong capillary stress generated at the interface between gas and liquid. In addition, a thick electrode has a tendency for the electrode active material layer to be delaminated from the current collector, which becomes a problem in the manufacture of secondary batteries. In addition, an excessive load of electrode active materials creates non-uniform charge transport, which leads to a significant increase in the local current density, which hinders the diffusion of lithium ions, resulting in poor rate performance and continuous capacity decay due to overload. These limitations mean that common electrode materials, such as polyvinylidene fluoride (PVdF) binders and carbon black conductors, are not suitable for manufacturing thick electrodes.

Accordingly, in order to manufacture secondary batteries with a higher energy density, the development of multifunctional electrode materials is necessary.

### Disclosure of Invention

### Technical Problem

In order to solve the problems in the prior art as described above, an object of the present disclosure is to provide a thick electrode having improved performance and environmental friendliness as it comprises an electrode active material layer into which an environmentally friendly binder and a highly conductive material are introduced.

In addition, another object of the present disclosure is to provide a secondary battery that comprises the above thick electrode, whereby it can exhibit a high energy density and a high capacity even with a small volume.

### Solution to Problem

In order to accomplish the above object, the present disclosure provides a thick electrode that comprises an electrode active material layer comprising an electrode active material, a binder, and a carbon-based conductive material, wherein the binder comprises a polyhydroxyalkanoate (PHA).

According to an embodiment of the present disclosure, the electrode active material layer may have a thickness of 250 µm or more.

According to another embodiment of the present disclosure, the polyhydroxyalkanoate (PHA) may comprise a repeat unit derived from 4-hydroxybutyrate (4HB).

According to another embodiment of the present disclosure, the polyhydroxyalkanoate (PHA) may comprise the repeat unit derived from 4-hydroxybutyrate (4HB) in an amount of 0.1 to 60% by mole based on the total number of moles of the repeat units contained in the polyhydroxyalkanoate (PHA).

According to another embodiment of the present disclosure, the polyhydroxyalkanoate (PHA) may comprise a repeat unit derived from 3-hydroxybutyrate (3HB); and a repeat unit derived from 4-hydroxybutyrate (4HB).

According to another embodiment of the present disclosure, the polyhydroxyalkanoate (PHA) may comprise the repeat unit derived from 3-hydroxybutyrate (3HB) in an amount of 40 to 85% by mole; and the repeat unit derived from 4-hydroxybutyrate (4HB) in an amount of 15 to 60% by mole, based on the total number of moles of the repeat units contained in the polyhydroxyalkanoate (PHA).

According to another embodiment of the present disclosure, the polyhydroxyalkanoate (PHA) may have an average molecular weight of 100,000 to 1,000,000 g/mole.

According to another embodiment of the present disclosure, the carbon-based conductive material may have a 3D mesh nano-fibrillar network structure.

According to another embodiment of the present disclosure, the carbon-based conductive material may be a carbonized cellulose.

According to another embodiment of the present disclosure, the cellulose may have a carbonization temperature of 800°C or higher.

According to another embodiment of the present disclosure, the electrode active material layer may comprise the binder in an amount of 0.5 to 20% by weight based on the total weight of the electrode active material layer.

According to another embodiment of the present disclosure, the electrode active material layer may comprise the carbon-based conductive material in an amount of 0.5 to 20% by weight based on the total weight of the electrode active material layer.

According to another embodiment of the present disclosure, the electrode active material may be a positive electrode active material.

Meanwhile, the present disclosure provides a secondary battery that comprises a negative electrode; a positive electrode; a separator interposed between the negative electrode and the positive electrode; and an electrolyte, wherein the positive electrode is the above thick electrode.

### Advantageous Effects of Invention

In the present disclosure, a binder containing polyhydroxyalkanoate (PHA) that is capable of forming a selective hydrogen bond with an electrode active material and has a high ionic conductivity, whereby it is possible to enhance the performance of a thick electrode. In addition, in the present disclosure, a carbon-based conductive material having a high conductivity and a 3D mesh nano-fibrillar network structure, instead of a particle-type conductive material such as carbon black, is used, whereby it is possible to impart a double conductive function with improved lithium-ion transfer efficiency and electrical conductivity to a thick electrode.

Accordingly, the present disclosure can provide a high-performance thick electrode and a secondary battery comprising the same, which has a small volume and exhibits a high energy density and a high capacity.

### Brief Description of Drawings

Figs. 1 and 2 are images of the positive electrodes fabricated in the examples and comparative examples, as observed using a camera and a field emission scanning electron microscope.
Fig. 3 is a graph showing the ionic conductivity of the positive electrodes fabricated in the examples and comparative examples, as measured using electrochemical impedance spectroscopy (EIS) in Test Example 2.
Fig. 4 is a graph for measuring the performance of secondary batteries fabricated in the Assembly Examples and Comparative Assembly Examples in Test Example 2.
Fig. 5 is an image for explaining the evaluation results of Test Example 3.
Fig. 6 is an image of the carbon-based conductive materials fabricated in the preparation examples, as observed using a field emission scanning electron microscope and a transmission electron microscope.

### Best Mode for Carrying out the Invention

Hereinafter, the present disclosure will be described in detail. The present disclosure is not limited to those given below, but it may be modified into various forms as long as the gist of the disclosure is not changed.

In the present specification, the term "comprising" is intended to specify a particular characteristic, region, step, process, element, and/or component. It does not exclude the presence or addition of any other characteristic, region, step, process, element and/or component, unless specifically stated to the contrary.

All numbers and expressions related to the quantities of components, reaction conditions, and the like used herein are to be understood as being modified by the term "about" unless otherwise indicated.

The present disclosure is characterized by using a PHA binder that is capable of forming a selective hydrogen bond with an electrode active material and has a high ionic conductivity as a novel functional binder that can replace the commonly used PVdF binder, whereby it is possible to significantly improve the performance of a thick electrode. In addition, the present disclosure is characterized by using a carbon-based conductive material (CNN) with a high conductivity and a 3D mesh nano-fibrillar network structure, instead of a particle-type conductive material such as carbon black, whereby it is possible to provide a smooth electrically conductive path while it is firmly connected to the electrode active material. Accordingly, the present disclosure can provide a high-performance thick electrode having a thickness of 250 µm or more, along with a high active material loading of about 40 mg/cm², and a secondary battery having a high energy density.

The present disclosure will be described in detail as follows.

### Thick electrode

The thick electrode according to the present disclosure comprises an electrode active material layer comprising an electrode active material, a binder, and a carbon-based conductive material, wherein the binder comprises a polyhydroxyalkanoate (PHA).

According to the present disclosure, the electrode active material layer may have a thickness of 250 µm or more, specifically, 300 µm or more, 400 µm or more, 500 µm or more, 600 µm or more, 700 µm or more, 800 µm or more, 900 µm or more, or 1,000 µm or more (e.g., 250 to 1,500 µm, 250 to 1,000 µm, 250 to 500 µm, or 250 to 300 µm). As the thickness of the electrode active material layer is within the above range, a thick electrode having a thick thickness and excellent performance can be provided.

According to the present disclosure, the electrode active material contained in the electrode active material layer may be a positive electrode active material or a negative electrode active material. Specifically, it may be a positive electrode active material.

The positive electrode active material may comprise lithium oxide that comprises one or more metals (e.g., manganese, nickel, cobalt, aluminum, etc.) and lithium. The lithium oxide may specifically be a lithium-manganese oxide, a lithium-cobalt oxide, a lithium-nickel oxide, a lithium-nickel-manganese oxide, a lithium-nickel-cobalt oxide, a lithium-manganese-cobalt oxide, or a lithium-nickel-cobalt-manganese oxide, but it is not limited thereto.

The negative electrode active material may comprise a carbon-based material, a silicon-based material, lithium metal, or a lithium alloy, but it is not limited thereto.

The content of such an electrode active material may be 60 to 99% by weight based on the total weight of the electrode active material layer. Specifically, it may be 70 to 95% by weight, 80 to 93% by weight, or 85 to 90% by weight, but it is not limited thereto.

The binder contained in the electrode active material layer comprises a polyhydroxyalkanoate (PHA). Specifically, the binder may be composed solely of a polyhydroxyalkanoate (PHA).

The PHA has a high adhesive strength and ionic conductivity and excellent oxidation resistance; thus, when used as a binder for a thick electrode, it can enhance the performance (efficiency) of the thick electrode. Specifically, the PHA has a relatively low glass transition temperature (T_{g}) and an ester group (-COO-) that allows it to be well mixed with an electrode active material and/or a carbon-based conductive material and to form a strong hydrogen bond, whereby it is possible to prevent the electrode active material layer of the thick electrode from flaking (delamination) from the current collector. In addition, the PHA is biodegradable, whereby it can increase the environmental friendliness of the thick electrode.

The PHA may be a homopolymer that comprises a repeat unit derived from one monomer or a copolymer that comprises repeat units derived from two or more different monomers.

The monomer that constitutes the repeat units contained in the PHA may be selected from the group consisting of 3-hydroxybutyrate (3HB), 3-hydroxypropionate (3HP), 3-hydroxyvalerate (3HV), 3-hydroxyhexanoate (3HH), 3-hydroxyheptanoate (3HHep), 3-hydroxyoctanoate (3HO), 3-hydroxynonanoate (3HN), 3-hydroxydecanoate (3HD), 3-hydroxydodecanoate (3HDd), 4-hydroxybutyrate (4HB), 4-hydroxyvalerate (4HV), 5-hydroxyvalerate (5HV), and 6-hydroxyhexanoate (6HH). For example, the PHA may be a copolymer that comprises one or more (two types or three types) repeat units derived from the above monomer(s).

According to the present disclosure, the PHA may comprise a repeat unit (4HB repeat unit) derived from 4-hydroxybutyrate (4HB). The PHA may be classified into crystalline PHA (cPHA), semi-crystalline PHA (scPHA), or amorphous PHA (aPHA) depending on the content of the 4HB repeat unit. Preferably, it may be amorphous PHA (aPHA).

The content of the 4HB repeat unit may be 0.1 to 60% by mole based on the total number of moles (100% by mole) of the repeat units contained in the PHA. Specifically, it may be 5 to 60% by mole, 10 to 60% by mole, 15 to 60% by mole, 20 to 60% by mole, 5 to 55% by mole, 10 to 55% by mole, 15 to 55% by mole, 20 to 55% by mole, 5 to 50% by mole, 10 to 50% by mole, 15 to 50% by mole, 20 to 50% by mole, 5 to 45% by mole, 10 to 45% by mole, 15 to 45% by mole, 20 to 45% by mole, 5 to 40% by mole, 10 to 40% by mole, 15 to 40% by mole, 20 to 40% by mole, or 25 to 35% by mole, but it is not limited thereto. As the content of the 4HB repeat unit is within the above range, the efficiency of a selective hydrogen bond with an electrode active material and the ionic conductivity are increased, whereby it is possible to provide a thick electrode with excellent performance.

The PHA may be a poly(3-hydroxybutyrate-co-4-hydroxybutyrate) copolymer (P3HB-co-4HB) that comprises a repeat unit (3HB repeat unit) derived from 3-hydroxybutyrate (3HB); and a repeat unit (4HB repeat unit) derived from 4-hydroxybutyrate (4HB), in light of the performance of the thick electrode.

When the PHA comprises the 3HB repeat unit and the 4HB repeat unit, the content of the 3HB repeat unit may be 40 to 85% by mole, and the content of the 4HB repeat unit may be 15 to 60% by mole, based on the total number of moles (100% by mole) of the repeat units contained in the PHA. Specifically, the content of the 3HB repeat unit may be 45 to 85% by mole, 50 to 80% by mole, 55 to 80% by mole, 60 to 75% by mole, or 65 to 70% by mole, and the content of the 4HB repeat unit may be 15 to 55% by mole, 20 to 50% by mole, 20 to 45% by mole, 25 to 40% by mole, or 30 to 35% by mole, but they are not limited thereto.

The PHA may have an average molecular weight of 100,000 to 1,000,000 g/mole. Specifically, it may be 200,000 to 900,000 g/mole, 400,000 to 800,000 g/mole, or 500,000 to 700,000 g/mole, but it is not limited thereto.

The PHA may have a glass transition temperature (T_{g}) of -45 to 80°C, -35 to 50°C, -20 to 20°C, or -15 to 0°C, but it is not limited thereto. In addition, the PHA may have a crystallization temperature (T_{c}) of 60 to 120°C, 70 to 115°C, 75 to 110°C, or 80 to 105°C, but it is not limited thereto. In addition, the PHA may have a melting temperature (Tₘ) of 100 to 170°C, 105 to 160°C, 110 to 150°C, or 115 to 140°C, but it is not limited thereto.

The content of the binder that comprises such PHA may be 0.5 to 20% by weight based on the total weight of the electrode active material layer. Specifically, it may be 1 to 15% by weight, 3 to 10% by weight, or 5 to 7% by weight, but it is not limited thereto.

According to the present disclosure, the carbon-based conductive material contained in the electrode active material layer is not particularly limited, but it may be a conductive material having a 3D mesh nano-fibrillar network structure. As the carbon-based conductive material has the above structure, it is possible to increase the transfer efficiency of lithium ions and form a smooth electrically conductive path. In addition, since the carbon-based conductive material has the above structure to surround the electrode active material, cracking and flaking can be suppressed during the manufacturing process of the thick electrode, thereby facilitating the implementation of a thick electrode.

Specifically, the carbon-based conductive material may be a carbonized cellulose. The cellulose is not particularly limited, but it may comprise at least one selected from the group consisting of methylcellulose, ethylcellulose, propylcellulose, hydroxypropylmethylcellulose, hydroxyethylcellulose, hydroxypropylcellulose, and carboxymethylcellulose.

The carbonization temperature of the cellulose may be 800°C or higher, 1,000°C or higher, 1,300°C or higher, 1,500°C or higher, 1,800°C or higher, 2,000°C or higher, 2,300°C or higher, 2,500°C or higher, or 2,800°C or higher (e.g., 800 to 3,000°C, 800 to 2,900°C, 1,300 to 2,800°C, or 1,600 to 2,800°C), but it is not limited thereto. As the carbonization temperature is within the above range, a carbon-based conductive material with an enhanced electrical conductivity can be achieved by maintaining a 3D mesh nano-fibrillar network structure and having high crystallinity like graphite.

For example, the carbon-based conductive material may be obtained by culturing aerobic microorganisms to obtain a crystalline cellulose hydrogel, replacing the solvent, and then carbonizing the crystalline cellulose hydrogel at a temperature of 800°C or higher. The carbonization of the crystalline cellulose hydrogel may be carried out by a primary carbonization process in which thermal treatment is performed at a temperature of 800°C or higher, or by a secondary carbonization process in which the crystalline cellulose hydrogel that has been subjected to the primary carbonization process is further thermally treated at a temperature of 800°C or higher (e.g., 1,500 to 3,000°C).

The content of the carbon-based conductive material may be 0.5 to 20% by weight based on the total weight of the electrode active material layer. Specifically, it may be 1 to 15% by weight, 3 to 10% by weight, or 5 to 7% by weight, but it is not limited thereto.

Meanwhile, the thick electrode according to the present disclosure may further comprise a current collector that supports the electrode active material layer. Specifically, the current collector may comprise copper, aluminum, gold, stainless steel, nickel, titanium, calcined carbon, or a combination thereof, and it may have various forms such as a film, sheet, foil, net, porous body, or foam.

### Secondary battery

The secondary battery according to the present disclosure comprises a negative electrode; a positive electrode; a separator interposed between the negative electrode and the positive electrode; and an electrolyte, wherein the positive electrode is the thick electrode described above.

The negative electrode contained in the secondary battery according to the present disclosure may comprise a negative electrode active material layer comprising a negative electrode active material and a conductive material; and a current collector. The negative active material is as described above, and the conductive material may be a commonly known conductive material or the carbon-based conductive material described above. The current collector is not particularly limited as long as it is a commonly known current collector.

The positive electrode contained in the secondary battery according to the present disclosure is the thick electrode described above. The present disclosure can achieve a secondary battery having a high energy density and capacity despite a small volume, since the positive electrode is the thick electrode described above.

The separator contained in the secondary battery according to the present disclosure is for physically separating the positive electrode and the negative electrode, and it may be a commonly known porous separator. Specifically, the porous separator may be a porous membrane formed of a polyolefin polymer such as polyethylene, polypropylene, polybutylene, or polypentene.

The electrolyte contained in the secondary battery according to the present disclosure may comprise a lithium salt and an organic solvent. The lithium salt may comprise at least one selected from the group consisting of LiPF₆, LiAsF₆, LiFSI, LiTFSI, LiCF₃SO₃, LiN(CF₃SO₂)₂, LiBF₄, LiBF₆, LiSbF₆, LiN(C₂F₅SO₂)₂, and LiSO₃CF₃. In addition, the organic solvent may comprise at least one selected from the group consisting of propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, gamma-butyrolactone, propylene sulfite, and tetrahydrofuran.

The secondary battery according to the present disclosure may have various forms such as coin type, stacked type, pouch type, and the like.

### Mode for the Invention

Hereinafter, the present disclosure will be described in detail with reference to Examples, but the scope of the present disclosure is not limited to the Examples.

### <Preparation of a carbon-based conductive material>

### [Preparation Example 1]

A crystalline cellulose hydrogel with a nanostructure was prepared from aerobic microorganisms by incubation at 30°C for two weeks. It was then washed with an alkaline solution and distilled water. Next, the hydrogel was immersed in tert-butanol at 30°C for 12 hours to replace the solvent and freeze-dried at 50°C for 3 days under conditions of 5 Pa or lower. Next, the freeze-dried sample was heated to 800°C at a rate of 5°C per minute in a nitrogen atmosphere, maintained isothermally for 2 hours, and carbonized to produce a carbon-based conductive material (CNN800).

### [Preparation Example 2]

The carbon-based conductive material prepared in Preparation Example 1 above was subjected to additional thermal treatment by heating to 1,800°C at a rate of 5°C per minute in an argon atmosphere and then maintaining it isothermally for 2 hours to produce a carbon-based conductive material (CNN1800).

### [Preparation Example 3]

The carbon-based conductive material prepared in Preparation Example 1 above was subjected to additional thermal treatment by heating to 2,800°C at a rate of 5°C per minute in an argon atmosphere and then maintaining it isothermally for 2 hours to produce a carbon-based conductive material (CNN2800).

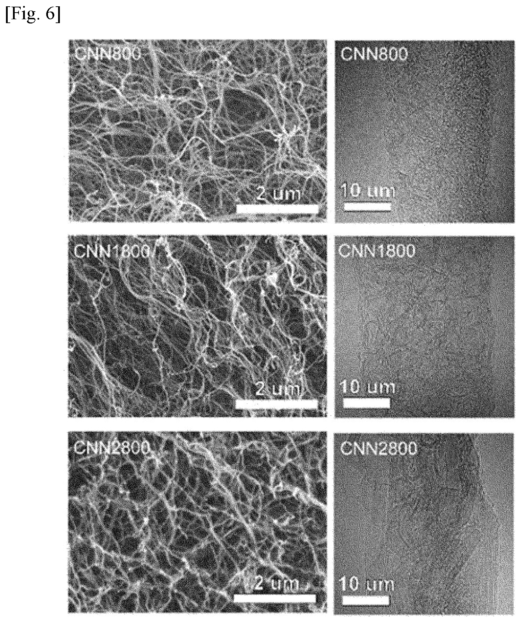

The carbon-based conductive materials (CNN800, CNN1800, and CNN2800) prepared in each of the above preparation examples were observed using a field emission scanning electron microscope (FE-SEM) and a transmission electron microscope (TEM). As a result, it was confirmed that the carbon-based conductive materials had a 3D mesh nano-fibrillar network structure (see Fig. 6).

### <Preparation of a PHA binder>

### [Preparation Example 4]

An amorphous PHA (CJ CheilJedang, aPHA) having an average molecular weight of 600,000 g/mole and composed of 70% by mole of a 3HB repeat unit (C₄H₅O₂) and 30% by mole of a 4HB repeat unit (C₄H₆O₂) was washed with acetone and dried in a vacuum oven at 30°C for 24 hours to prepare a PHA binder.

### <Fabricate of a positive electrode>

### [Example 1]

Li(NiCoMn)O₂ (NCM) was prepared as a positive electrode active material, the PHA binder (aPHA) of Preparation Example 4 was prepared as a binder, and the carbon-based conductive material (CNN800) of Preparation Example 1 was prepared as a conductive material. Next, NCM:CNN800:aPHA were added to methylpyrrolidone (NMP) at a weight ratio of 90:5:5 and mixed to prepare a positive electrode active material slurry. Next, it was uniformly coated onto aluminum foil with a thickness of 15 µm to fabricate a positive electrode having a positive electrode active material layer with a thickness of 250 µm.

### [Example 2]

A positive electrode having a positive electrode active material layer with a thickness of 250 µm was fabricated through the same procedure as in Example 1, except that the carbon-based conductive material (CNN1800) of Preparation Example 2 was used as a conductive material.

### [Example 3]

A positive electrode having a positive electrode active material layer with a thickness of 250 µm was fabricated through the same procedure as in Example 1, except that the carbon-based conductive material (CNN2800) of Preparation Example 3 was used as a conductive material.

### [Comparative Example 1]

A positive electrode having a positive electrode active material layer with a thickness of 100 µm was fabricated through the same procedure as in Example 1, except that polyvinylidene fluoride (PVdF) was used as a binder, and Super P was used as a conductive material.

### [Comparative Example 2]

A positive electrode having a positive electrode active material layer with a thickness of 250 µm was fabricated through the same procedure as in Example 1, except that polyvinylidene fluoride (PVdF) was used as a binder.

### [Comparative Example 3]

A positive electrode having a positive electrode active material layer with a thickness of 250 µm was fabricated through the same procedure as in Example 2, except that polyvinylidene fluoride (PVdF) was used as a binder.

### [Comparative Example 4]

A positive electrode having a positive electrode active material layer with a thickness of 250 µm was fabricated through the same procedure as in Example 3, except that polyvinylidene fluoride (PVdF) was used as a binder.

### [Test Example 1]

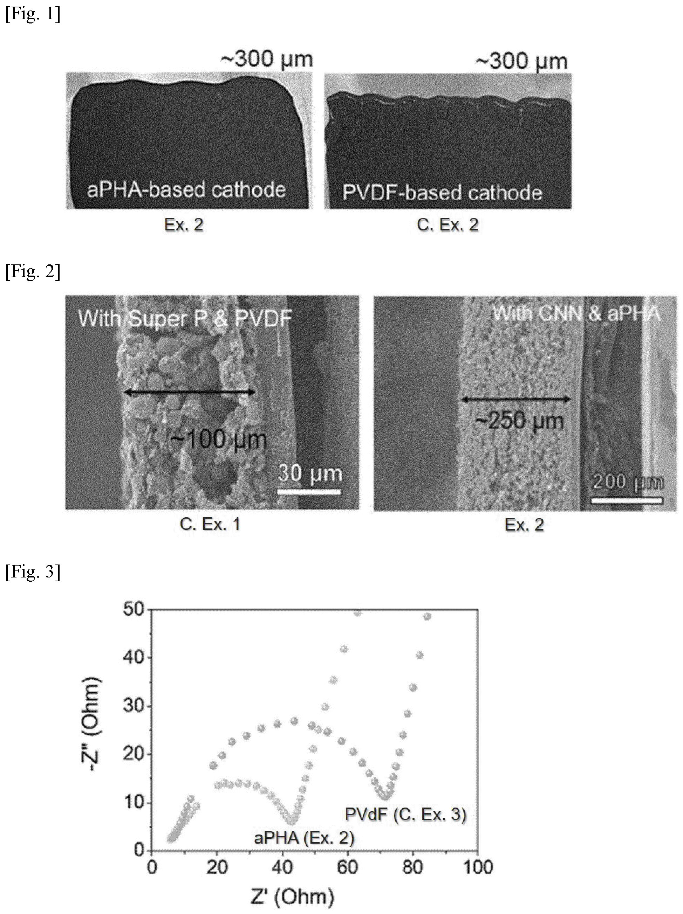

The positive electrodes fabricated in the examples and comparative examples were observed using a camera and a field emission scanning electron microscope (FE-SEM). The results are shown in Figs. 1 and 2.

Referring to Fig. 1, the positive electrode of Example 2 had a positive electrode active material layer formed densely and uniformly without cracking even when the thickness of the positive electrode active material layer was 250 µm or more, whereas the positive electrode of Comparative Example 2, in which a PVdF binder was used, had a positive electrode active material layer that was not formed uniformly due to cracking.

Referring to Fig. 2, the positive electrode of Example 2 had a positive electrode active material layer that was uniformly coated with a low porosity, whereas the positive electrode of Comparative Example 1, in which a Super P conductive material and a PVdF binder were used, had a positive electrode active material layer that was unevenly coated with a high porosity.

### <A secondary battery Assembly>

### [Assembly Example 1]

A CR2032-type coin cell secondary battery was assembled using the positive electrode of Example 1 (aPHA/CNN800), a LiNO₃-coated carbon-based conductive material (CNN1800) as the negative electrode, a 20 µm-thick polypropylene-based separator, and a 1 M LiPF₆ EC/DMC electrolyte.

### [Assembly Example 2]

A CR2032-type coin cell secondary battery was assembled using the positive electrode of Example 2 (aPHA/CNN1800), a LiNO₃-coated carbon-based conductive material (CNN1800) as the negative electrode, a 20 µm-thick polypropylene-based separator, and a 1 M LiPF₆ EC/DMC electrolyte.

### [Assembly Example 3]

A CR2032-type coin cell secondary battery was assembled using the positive electrode of Example 3 (aPHA/CNN2800), a LiNO₃-coated carbon-based conductive material (CNN1800) as the negative electrode, a 20 µm-thick polypropylene-based separator, and a 1 M LiPF₆ EC/DMC electrolyte.

### [Comparative Assembly Example 1]

A CR2032-type coin cell secondary battery was assembled using the positive electrode of Comparative Example 4 (PVdF/CNN2800), a LiNO₃-coated carbon-based conductive material (CNN1800) as the negative electrode, a 20 µm-thick polypropylene-based separator, and a 1 M LiPF₆ EC/DMC electrolyte.

### [Test Example 2]

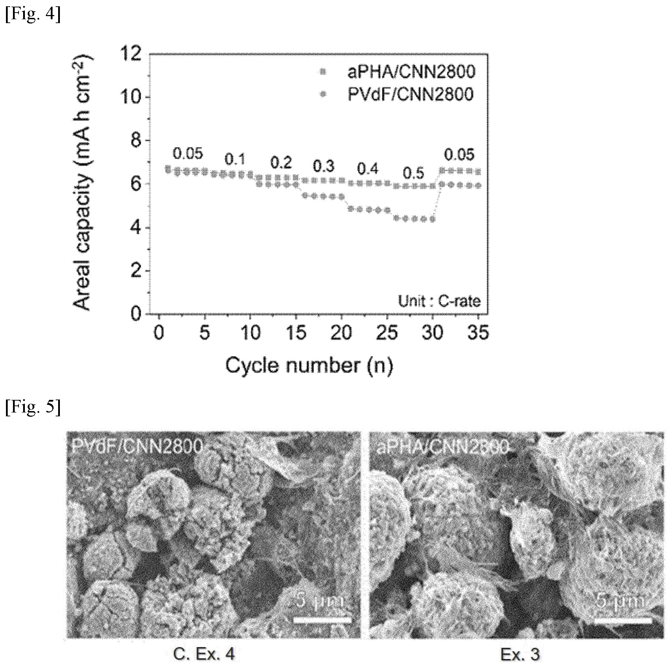

The voltage window was 2.7 to 4.3 V, and electrochemical impedance analysis was performed in the frequency range of 1 MHz to 0.1 MHz to evaluate the performance of the positive electrodes and secondary batteries. The results are shown in Figs. 3 and 4.

Referring to Fig. 3, the ionic conductivity of each positive electrode for each binder, PVdF and aPHA, using EIS (electrochemical impedance spectroscopy) was measured. The positive electrode with an aPHA binder showed a charge transfer resistance of 40 Ω or less, which is 60% of the positive electrode with a PVdF binder, which showed a charge transfer resistance of 60 Ω or more.

Referring to Fig. 4, when the rate performance (current rate: 0.05 to 0.5 C) of the positive electrode with an aPHA binder and that of the positive electrode with a PVdF binder are compared, the rate performance of the positive electrode with a PVdF binder decreases with the number of cycles as compared with the positive electrode with an aPHA binder. Specifically, the secondary battery (aPHA/CNN2800) of **Assembly** Example 3 maintained 88.9% of the initial capacity at a 10 C-rate, which is 10 times higher, and the secondary battery (PVdF/CNN2800) of Comparative **Assembly** Example 1 maintained 67.8% of the initial capacity.

### [Test Example 3]

After the performance evaluation in Test Example 2, damage to the NCM particles, which were the positive electrode active material, was observed using a field emission scanning electron microscope (FE-SEM). The results are shown in Fig. 5.

Referring to Fig. 5, the positive electrode (aPHA/CNN2800) of Example 3 maintained the NCM particles stably after cycling, whereas the positive electrode (PVdF/CNN2800) of Comparative Example 4 showed damaged NCM particles. This supports that the aPHA binder has excellent ion transport properties and enables uniform coating, thereby minimizing damage to NCM particles even when a current overload of the thick electrode occurs.

## Claims

1. A thick electrode, which comprises an electrode active material layer comprising an electrode active material, a binder, and a carbon-based conductive material, wherein the binder comprises a polyhydroxyalkanoate (PHA).

2. The thick electrode of claim 1, wherein the electrode active material layer has a thickness of 250 µm or more.

3. The thick electrode of claim 1, wherein the polyhydroxyalkanoate (PHA) comprises a repeat unit derived from 4-hydroxybutyrate (4HB).

4. The thick electrode of claim 3, wherein the polyhydroxyalkanoate (PHA) comprises the repeat unit derived from 4-hydroxybutyrate (4HB) in an amount of 0.1 to 60% by mole based on the total number of moles of the repeat units contained in the polyhydroxyalkanoate (PHA).

5. The thick electrode of claim 1, wherein the polyhydroxyalkanoate (PHA) comprises a repeat unit derived from 3-hydroxybutyrate (3HB); and a repeat unit derived from 4-hydroxybutyrate (4HB).

6. The thick electrode of claim 5, wherein the polyhydroxyalkanoate (PHA) comprises the repeat unit derived from 3-hydroxybutyrate (3HB) in an amount of 40 to 85% by mole; and the repeat unit derived from 4-hydroxybutyrate (4HB) in an amount of 15 to 60% by mole, based on the total number of moles of the repeat units contained in the polyhydroxyalkanoate (PHA).

7. The thick electrode of claim 1, wherein the polyhydroxyalkanoate (PHA) has an average molecular weight of 100,000 to 1,000,000 g/mole.

8. The thick electrode of claim 1, wherein the carbon-based conductive material has a 3D mesh nano-fibrillar network structure.

9. The thick electrode of claim 1, wherein the carbon-based conductive material is a carbonized cellulose.

10. The thick electrode of claim 9, wherein the cellulose has a carbonization temperature of 800°C or higher.

11. The thick electrode of claim 1, wherein the electrode active material layer comprises the binder in an amount of 0.5 to 20% by weight based on the total weight of the electrode active material layer.

12. The thick electrode of claim 1, wherein the electrode active material layer comprises the carbon-based conductive material in an amount of 0.5 to 20% by weight based on the total weight of the electrode active material layer.

13. The thick electrode of claim 1, wherein the electrode active material is a positive electrode active material.

14. A secondary battery, which comprises a negative electrode, a positive electrode, a separator interposed between the negative electrode and the positive electrode, and an electrolyte, wherein the positive electrode is the thick electrode according to any one of claims 1 to 13.
